# EUROPEAN PATENT APPLICATION

(11) **EP 0 756 388 A2**
(43) Date of publication of application: **29.01.1997**
(21) Application number: 96305467.1
(22) Date of filing: 25.07.1996
(51) Int. Cl.: H04B 1/707

(54) **Spread spectrum communication system**

(30) Priority: 25.07.1995 JP 189024/95
(71) Applicant: KABUSHIKI KAISHA TOSHIBA, Kawasaki-shi, Kanagawa-ken 210 (JP)
(72) Inventor: Nagata, Minoru, Tokyo (JP); Shirato, Hiroaki, Tokyo (JP)
(74) Representative: O'Connell, David Christopher

(57) **Abstract**

A spread spectrum communication system including; transmitting sections 11 and 12 in which the signals for transmitting are executed the spread spectrum modulation and transmitted. The transmitted signals from the transmitting sections 11 and 12 are received in the receiving sections 13 and 14. The transmitting section 11 is equipped with the synchronous data transmitting section 16 and the transmitting section 12 is equipped with the synchronous data receiving section 17 for receiving the synchronous data transmitted from the synchronous data transmitting section 16. The transmitting section 11 having the synchronous data transmitting section 16 transmits the synchronous information of the spread spectrum codes which are used for the spread spectrum modulation, and the synchronous information is received in the synchronous data receiving section 17, and the spread spectrum codes which are used when the transmitter equipped with the synchronous data receiving section 17 executes the spread spectrum modulation are synchronized with each other by the received synchronous information, so that it is possible the multiplex communication by the transmitters with the same spread spectrum codes having different phases.

## Description

The present invention generally relates to a spread spectrum communication system which make the multiplex communication possible by using a single spread spectrum code.

It is known in the art that the spread spectrum systems can easily enhance a secrecy and an interference resistance in communication systems. And further, it has been known in the communication system using the spread spectrum modulation that even in communications using same frequency bands it will be possible to execute the multiplex communication by using different spread spectrum codes. And furthermore, event in communications using same spread spectrum codes it will be possible to perform a multiplex communication by executing a spread spectrum modulation at phases differentiated in the time domain.

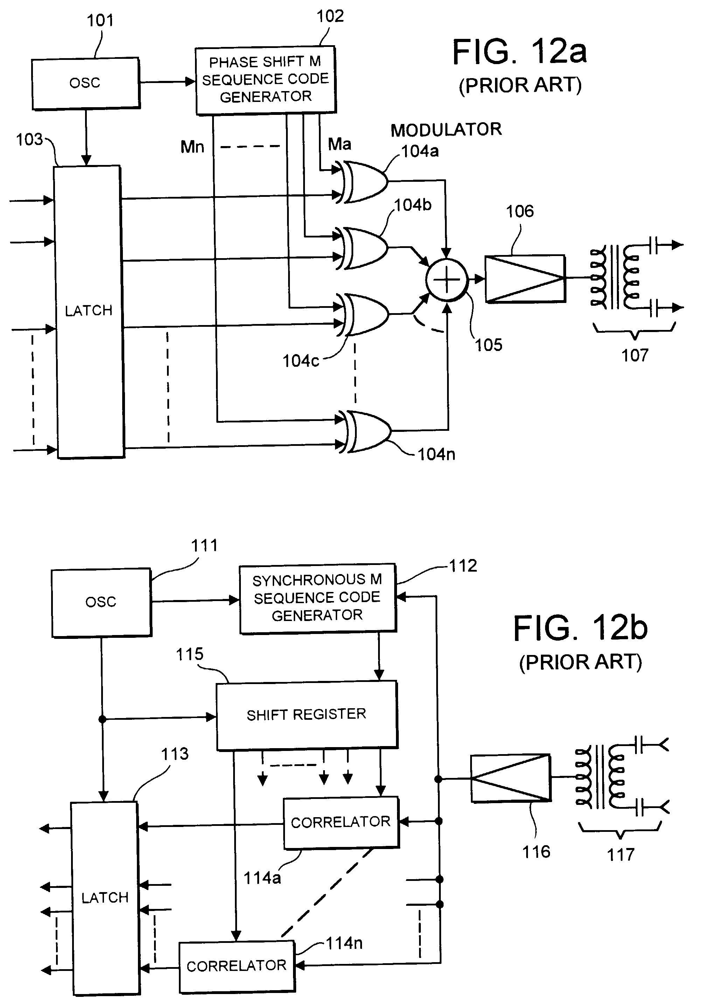

FIGURE 12a shows a known multiplex transmitter adopting a system for multiplexing signals by executing a spread spectrum modulation on signals using same spread spectrum codes but phase-differentiated in time domain. One example of such transmitters is disclosed in the Japanese Patent Application; Tokkai-Sho 62-45237. In this application, phase shift M sequence generator 102 generates a plurality of same spread spectrum codes but phase-differentiated in time domain. Different transmission data are executed spread spectrum modulations by spread spectrum demodulators 104a through 104n, using the same spread spectrum codes but phase-differentiated in the time domain from those to be multiplexed together in multiplexing circuit 105 for transmission.

In the conventional embodiment, all transmission data are received in one receiver shown in FIGURE 12b. However when only a data executed spread spectrum modulation in using spread spectrum codes with specific phases is needed, it will be possible to selectively receive the signal by matching the phase of the spread spectrum codes which are used for executing a spread spectrum demodulation in a receiving section to the phase of spread spectrum codes of signals to be received. Therefor, it is possible to multiplex signals by executing the spread spectrum modulation using the same spread spectrum codes but phase-differentiated in time domain.

However, in the spread spectrum multiplex communication system which multiplex signals by executing the spread spectrum modulation on different information in using the same spread spectrum codes but phase-differentiated in time domain, since there inevitably occurs a moment of phase coincidence among or between same spread spectrum codes if the synchronizations are not tool among these same spread spectrum codes having phases differentiated in time domain the multiplexed data are interfered at the moment.

So, in the spread spectrum multiplex communication system which multiplex signals after executing the spread spectrum modulation on different information in using same spread spectrum codes but phase-differentiated in time domain. The spread spectrum codes with phase-differentiated in time domain necessary for multiplexing are generated in the same spread spectrum code generator to obtain the synchronization in a time domain. For instance, in the conventional system shown in FIGURE 12, they are generated in the phase shift M system generator 102.

As the conventional embodiment is possible to obtain the synchronization among these spread spectrum codes easily it had realized the spread spectrum communication multiplex system using only the sam spread spectrum codes having phases differentiated in time domain which are synchronized with each other.

However, in the conventional system which executes a spread spectrum modulation on multiple signals with same spread spectrum codes but phase-differentiated in time domain to multiplex the signals, there was a drawback that since it generates spread spectrum codes for multiplexing in the same spread spectrum code generator it could be used only when all data for multiplexing ware transmitted from one transmitter.

The conventional system mentioned above had a drawback that since spread spectrum codes for multiplexing ware not generated in the same spread spectrum code generator when transmitters were separated the system for multiplexing signal after executing spread spectrum modulation on the signals in using the same spread spectrum codes but phase-differentiated in time domain could not be used in practical application.

It is, therefore, an object of the present invention to provide a spread spectrum communication system useful for multiplexing signals by executing a spread spectrum modulation on a plurality of signals in using same spread spectrum codes but phase-differentiated in time domain.

In order to achieve the above object, a spread spectrum communication system according to one aspect of the present invention includes transmitters for executing a spread spectrum modulation on signals and transmitting the spread spectrum modulated signals, and at least one receiver for receiving the signals transmitted from the receivers, and it is characterized by that at least one of the transmitters is equipped with a synchronous transmitting section and other transmitters are equipped with synchronous data receiving sections for receiving the synchronous data transmitted from the synchronous data transmitting section, a synchronous information of the spread spectrum codes which are used when the transmitter with the synchronous data transmitting section executes the spread spectrum modulation is transmitted from the synchronous data transmitting section and received to the synchronous data receiving sections, and the spread spectrum codes which are used when the transmitter with synchronous data receiving section execute the spread spectrum modulation are synchronized with each other by the received synchronous information, so that the multiplex communication by the transmitters is executed by using the same spread spectrum codes having phases differentiated in time domain.

According to the means mentioned above, one of the multiple transmitters is equipped with the synchronous data transmitting section. While the other transmitters are equipped with the synchronous data receiving section to synchronize the spread spectrum codes to be transmitted between the transmitters. Thus, each of the multiple transmitters may be located remote locations. Also the signals may be executed a spread spectrum modulation using the same spread spectrum codes but phase-differentiated in time domain, if the spread spectrum codes for a multiplex communication could not be collectively generated in a single spread spectrum code generator. Thus it is possible to realize a spread spectrum multiplex communication for multiplexing the signals.

Additional objects and advantages of the present invention will be apparent to persons skilled in the art from a study of the following description and the accompanying drawings, which are hereby incorporated in and constitute a part of this specification.

For a better understanding of the present invention and many of the attendant advantages thereof reference will be now made by way of example to the accompanying drawings, wherein:
FIGURE 1 is a block diagram for explaining one embodiment of the present invention;
FIGURE 2 is a diagram illustrating a phase timing of the spread spectrum codes in the transmitters;
FIGURE 3 is a diagram illustrating a phase timing of the spread spectrum codes in the transmitters;
FIGURE 4 is a block diagram illustrating a other embodiment of the present invention;
FIGURE 5 is a diagram illustrating the phase timing of the spread spectrum codes used for executing spread spectrum modulation on transmission signals, synchronous data or control data in the transmitting sections or receiving sections shown in FIGURE 4;
FIGURE 6 is a block diagram illustrating a second embodiment of the present invention;
FIGURE 7 is a block diagram illustrating a third embodiment of the present invention;
FIGURE 8 is a block diagram illustrating a fourth embodiment of the present invention;
FIGURE 9 is a block diagram illustrating a fifth embodiment of the present invention;
FIGURE 10 is a block diagram illustrating a sixth embodiment of the present invention;
FIGURE 11 is a block diagram illustrating a seventh embodiment of the present invention; and
FIGURES 12a and 12b are block diagrams of the multiplex communication system using the conventional spread spectrum technique.

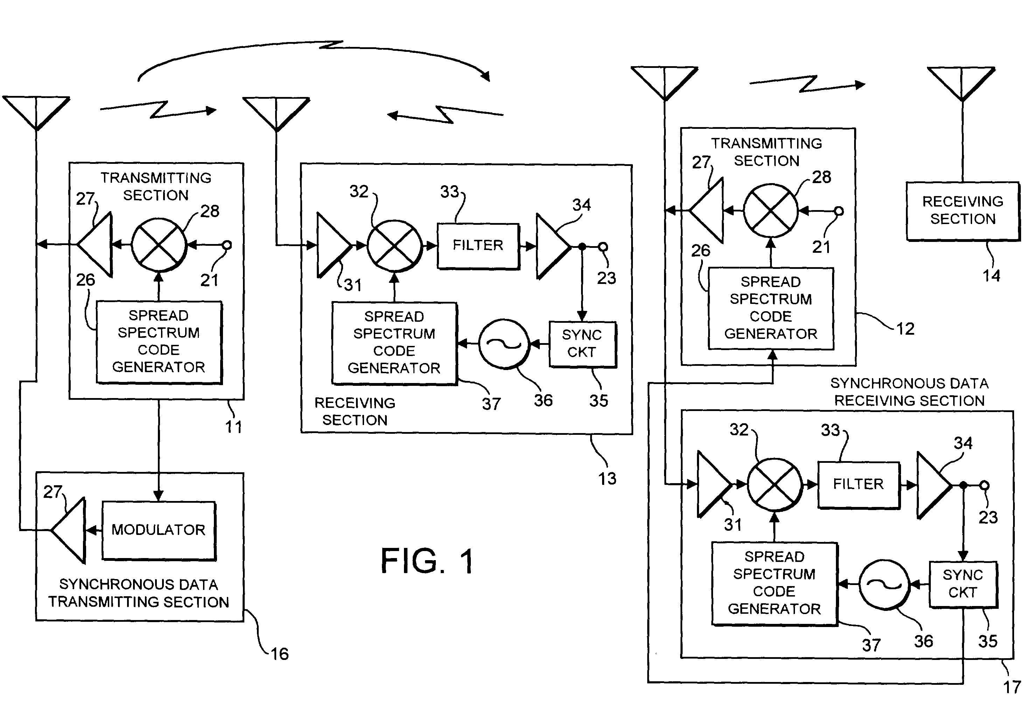

The present invention will be described in detail with reference to the FIGURES 1 through 11.

FIGURE 1 is a block diagram for explaining one embodiment of the present invention. In FIGURE 1, 11 and 12 denote transmitting sections, 13 and 14 denote receiving sections, 16 denotes a synchronous data transmitting section, and 17 denotes a synchronous data receiving section.

In transmitting section 11, a transmission data supplied from a transmitting data input terminal 21 is executed a spread spectrum modulation in a spread spectrum modulator 28 by using a spread spectrum codes generated in a spread spectrum codes generator 26 and transmitted by taking specific process for a radio transmitting in a transmission processing section 27. And, in the synchronous data transmitting section 16, a phase information of the spread spectrum codes which are used when the transmission data is executed a spread spectrum modulation in the spread spectrum modulator 28 of the transmitting section 11 is obtained from the spread spectrum code generator 26 of the transmitting section 11 and transmitted through the transmission processing section 27 as a synchronous data.

The synchronous data receiving section 17 receives the synchronous data transmitted from the synchronous data transmitting section 16 and the phase information of the spread spectrum codes which are used when the transmission data is executed a spread spectrum modulation in the transmitting section 11.

In the transmitting section 12, spread spectrum codes which are synchronized with each other so as to fix the phase of the spread spectrum codes to be transmitted to the state that it is shifted by a specific angle from the phase of the spread spectrum codes used for executing the spread spectrum modulation on the transmission data in the transmitting section 11, And, the transmission data supplied from transmitting data input terminal 21 is executed the spread spectrum modulation in the spread spectrum modulator 28 by using the spread spectrum codes and transmitted through a transmission processing section 27.

On the other hand, in the receiving section, spread spectrum codes synchronized with spread spectrum modulation signal carrying desired data to be received are generated so that by executing a spread spectrum demodulation by using the spread spectrum codes it is possible to select a desired signal to be received among the multiplexed signals.

As the receiving sections 13 and 14 have the same internal constructions, only the receiving section 13 is illustrated its internal construction. As to the received spread spectrum signal introduced into the receiving input section 31, synchronous information is extracted from the spread spectrum signal by a delay locked loop comprised of a spread spectrum demodulator 32, a filter 33 which passes only a needed signal component, a receiving output amplifier 34, a synchronous circuit 35 which captures a synchronization of the spread spectrum demodulation, a clock generator 36, and a spread spectrum code generating section 37, and by matching the phase of the spread spectrum code generated in the spread spectrum code generator 27 to the phase of the spread spectrum codes which are executing the spread spectrum modulation on the transmission data which is to be received the transmission data executed the spread spectrum modulation in the spread spectrum demodulator 32 and output to the receiving data output terminal 23 via the filter 33 and the receiving amplifier 34.

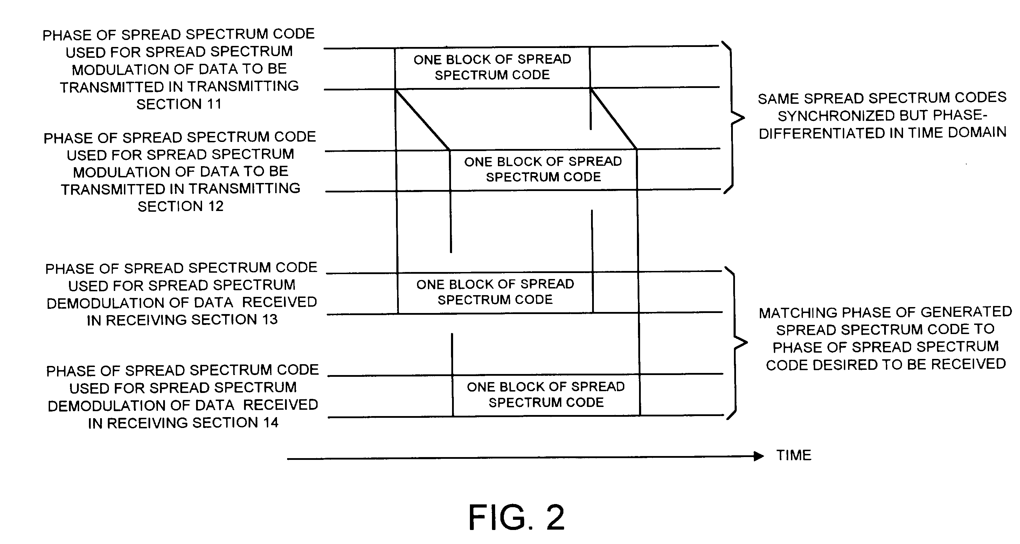

By reverencing FIGURE 2 the relation of the phases of the spread spectrum codes used for the spread spectrum modulation of data to be transmitted in the transmitting sections 11 and 12 and the spread spectrum codes used for the spread spectrum demodulation of the data received in the receiving sections 13 and 14 will be explained. The phase relation of the spread spectrum codes shown in FIGURE 2 represents the case that the transmission data from the transmitting section 11 is received in the receiving section 13 and the transmission data from the transmitting section 12 is received in the receiving section 14.

In this embodiment, it is possible that the transmitters 11 and 12 execute the spread spectrum modulation on signals using the same spread spectrum codes but phase-differentiated in time domain even when the spread spectrum codes for multiplexing are not collectively generated in a single spread spectrum code generator. Therefor, it is possible to realize the multiplexing system of the spread spectrum communication which multiplexes the signals from the transmitting sections 11 and 12 in the spread spectrum communication using only one kind of the spread spectrum code.

According to the embodiment mentioned above, it is possible to realize the transmitting/receiving system using only the same spread spectrum codes even in the multiplexing communication using the spread spectrum communication which is provided with multiple transmitters. Therefor, it has an advantage that since it may define only one spread spectrum code in each transmitting/receiving apparatuses which comprises the transmitting/receiving system the transmitting/receiving system becomes simple. Especially, the case of construction of small scale radio communication systems for communicating information among various kinds of the information devices, television receivers or video games in business offices or homes is took into account, the establishment of each transmitting/receiving apparatuses which comprise the communication system is not always executed by a person which has an expert knowledge. In this case, it is important the establishment operation of the apparatuses is executed simply, so that the advantage that the establishment of each transmitting/receiving apparatuses is simple is very important.

In the explanation of the embodiment mentioned above, the system how to transmit the synchronous data is not mentioned. However, think about the spread spectrum modulation of the data transmitting it is a matter of course that it has an advantage that abilities of secrecy and interference resistance of the communication system is enhanced by making the synchronous data the spread spectrum system. Further, when the synchronous data is executed the spread spectrum modulation spread spectrum codes must be used for executing the spread spectrum modulation on the synchronous data. However, by using the same spread spectrum codes which are used for executing the spread spectrum modulation on the normal data transmitted from the transmitting section it is possible to realize the transmitting/receiving system using only the same spread spectrum codes in the multiplex communication using the spread spectrum communication provided with multiple transmitters. So that it will be able to realize the multiplex system of the spread spectrum communication which is making the best use of the features of the present invention.

FIGURE 1 illustrates a construction of the synchronous data receiving section 17 for the case as described above. A received signal introduced into a receiving input section 31 is executed the synchronous capture of the spread spectrum signal by a delay lock loop which is comprised of a spread spectrum demodulator 32, a filter which passes only a needed signal component, a receiving output amplifier 34, a synchronous section 35 which captures the synchronization of the spread spectrum demodulation it is easy to achieve the abilities of secrecy and interference resistance of the communicating fusion, a clock generator 36, and a spread spectrum code generator 37. In this capturing process a synchronous data when the transmission data is executed the spread spectrum modulation in the transmitting section 11 is extracted from a synchronous section 35 and the spread spectrum code generator of the transmitting section 12 is controlled.

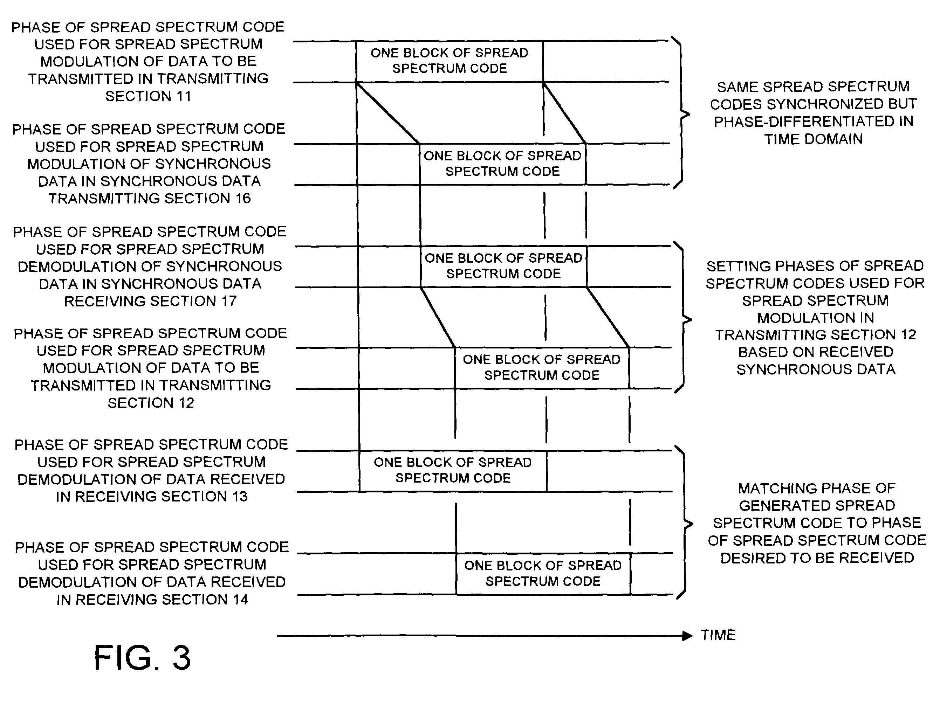

In addition to the phase relations of the spread spectrum codes used for executing spread spectrum modulation on transmission data in the transmitting sections 11 and 12 and the spread spectrum codes used for executing spread spectrum demodulation on the data received in the receiving sections 13 and 14, FIGURE 3 illustrates the phase relation of the spread spectrum codes used for executing the spread spectrum modulation on the synchronous data in the synchronous data transmitting section 16.

The phase relations of the spread spectrum codes shown in FIGURE 3 represents that the transmission data of the transmitting section 11 is received in the receiving section 13 and the transmission data of the transmitting section 12 is received in the receiving section 14. And further, the synchronous data transmitted from the synchronous data transmitting section 16 represents that the data are received in the synchronous data receiving section 17. When the spread spectrum modulation of the synchronous data is executed the phase of it has to be shifted as the synchronization of the spread spectrum codes used for the spread spectrum modulation are introduced into the receiving section 11 as the same way that the data are executed the spread spectrum modulations in multiple transmitting sections. However, since the synchronous data transmitting section 16 is connected to the transmitting section 11 the synchronous information of the spread spectrum codes is easily restored without problems.

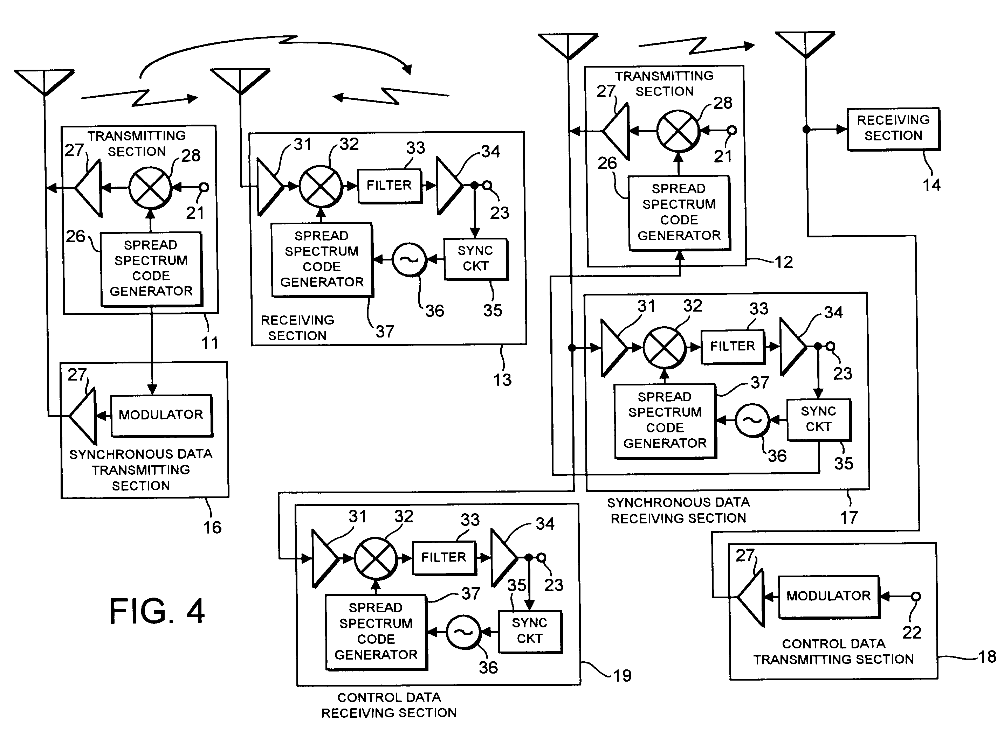

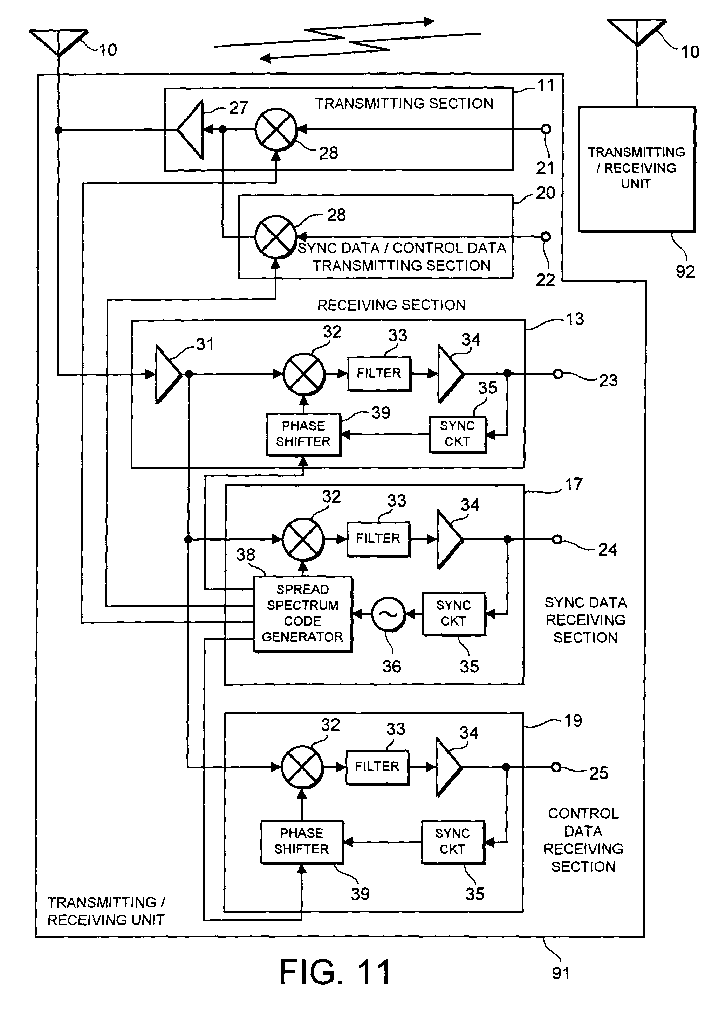

FIGURE 4 is a block diagram for explaining another embodiment of the present invention. In this embodiment in addition to the embodiment of the FIGURE 1 a control data transmitting section 18 is connected to the receiving section 14, and the control data receiving section 19 is connected to the transmitting section 12 newly. In this embodiment, the same component as these shown in FIGURE 11 are assigned with the same references. The control data transmitting section 18 and the control data receiving section 19 are explained mainly here.

While the receiving section 14 is receiving the data transmitted from the transmitting section 12, it stops receiving the data transmitted from the transmitting section 12 and starts to receive the data transmitted from the transmitting section 11 newly for example, if the transmitting section 12 is left keep transmitting the data which does not have a receiver it is a waste of the power necessary for the transmission and it is not good from the aspect of the effective usage of the radio frequency signal resources.

So, in the embodiment as illustrated in FIGURE 4, a control data for controlling the operation of the transmitting section 12 is transmitted by the control data transmitting section 18 connected to the receiving section 14, ad the control data is received in the control data receiving section 19 connected to the transmitting section 12 to control the transmitting section 12.

Accordingly, it is advantageously possible for the receiving section 14 to start or stop the transmission of the transmitting data, control the change of the contents of the transmission data, or control the transmitting power of the transmitting section 12 to the required minimum from a viewpoint of the effective use of the radio wave resources or decreasing of the power consumption over the transmitting section 12.

The above description about the embodiment as illustrated in FIGURE 4 does not specify how to transmit the control data. However, when taking into account that the transmission data is executed a spread spectrum modulation, transmitting is took into account it is a matter of course by executing also the spread spectrum modulation on the control data, there is an advantage that the abilities of secrecy and interference resistance of the communication system is enhanced.

Further, when the control data is also executed the spread spectrum modulation spread spectrum codes must be used for the spread spectrum modulation. However, by using the same spread spectrum codes which are used for the spread spectrum modulation on the normal data transmitted from the transmitting section as the spread spectrum codes it is possible to realize the transmitting/receiving system using only the same spread spectrum codes in the multiplex communication using the spread spectrum communication provided with multiple transmitters.

In this case, when the spread spectrum modulation of the control data is executed the phase of it has to be shifted as the same way that the data are executed the spread spectrum modulations in multiple transmitting sections. However, since the control data transmitting section connected to the receiving section, which receives signals executed the spread spectrum modulation in the transmitting section can obtain the synchronous information, the spread spectrum codes must be synchronized with each other based on the information, so that there is no problem.

In the embodiments of the present invention explained above, it was explained that the each the transmitting section which has the transmitting section for transmitting data the receiving section which has the receiving section for receiving the data, and further in the data transmitting section the synchronous data transmitting section for transmitting the synchronous data needed when the spread spectrum modulation is executed with the same spread spectrum codes, and the synchronous data receiving section for receiving the synchronous data have it roll and the minimum required means.

However, in small scale radio communication systems for communicating information among various kinds of the information devices, television receivers or video games in business offices or homes, the transmitting section or receiving section are not always predetermined. For instance, when one of the elements constructing such a small scale radio communication system a radio tape recorder (hereinafter referred to the VTR) for recording video signals is took into account, some time it receives the video data from the transmitting section and records it, and other time it reproduces the video data and transmits the video data. And further, when it starts to transmit the video data, if other transmitter is transmitting something it receives the synchronous data which is transmitted from the transmitting section simultaneously and synchronize the spread spectrum codes used for executing the spread spectrum modulation on the video data which it transmits, and if other transmitter transmits nothing it transmits the synchronous data which it used for the spread spectrum modulation. For these operations each the transmitting section, receiving section and further in the transmitting section the synchronous data transmitting section or receiving section of the spread spectrum code have to be executed their entire roles.

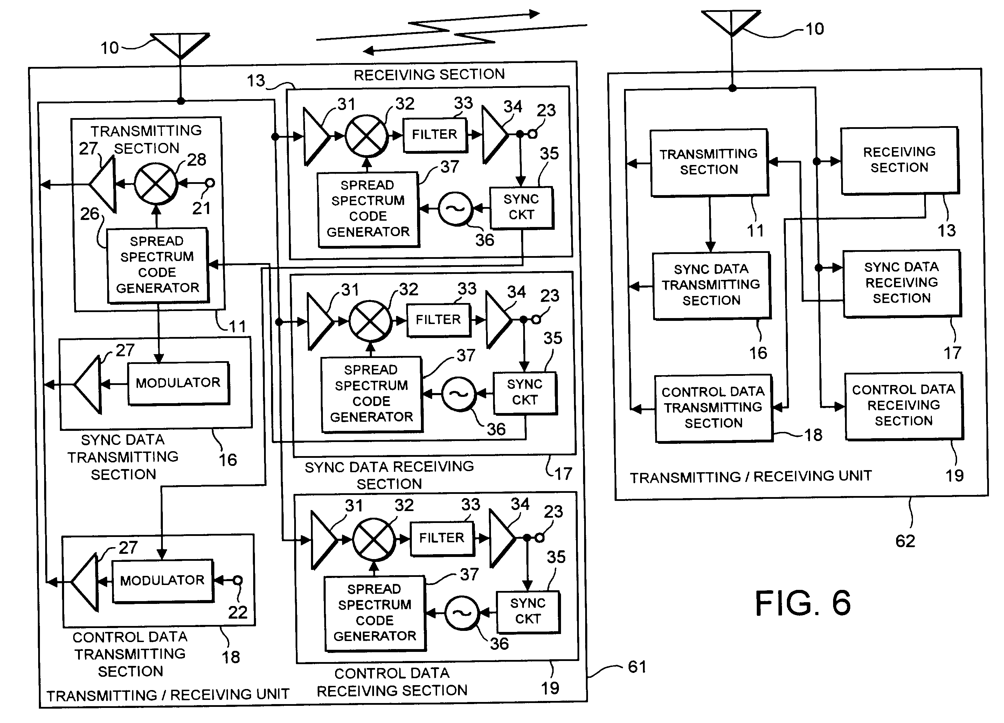

FIGURE 6 is a block diagram illustrating a second embodiment of the invention wherein the transmitter and the receiver are integrated into a single unit for satisfying the demands as mentioned above. In the drawing sections which execute the same operations with corresponding sections in the embodiment of FIGURE 4 are assigned with the same references.

In this embodiment, by using the transmitting/receiving units 61 and 62 which are equipped with transmitting section 11 and the receiving section 13 it can effectuate all rolls of the transmitting section, the receiving section, and further in the transmitting section the synchronous data transmitting section or synchronous data receiving section of the spread spectrum code. So, it is possible to realize the radio communication system using the multiplex system of the spread spectrum communication where all of equipments constructing the radio communication system can communicate in the equal relation without the transmitting and receiving functions being not separately carried out in the specific apparatus.

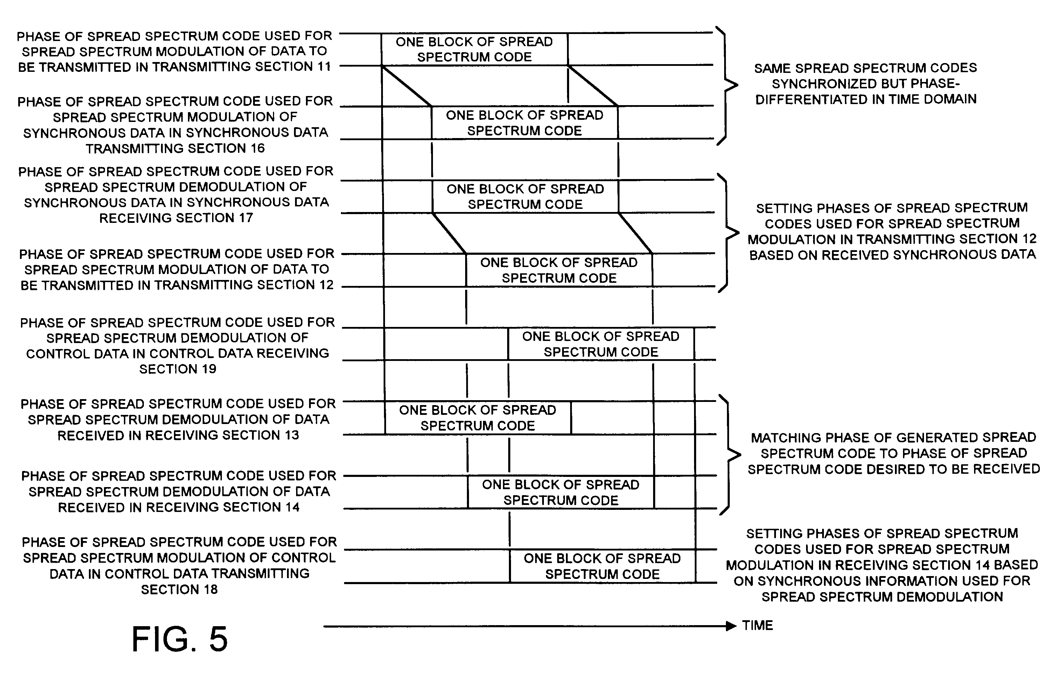

Here, since the transmitting and receiving operations of the transmitting/receiving units 61 and 62 shown in FIGURE 6 are the same as those in the embodiment as illustrated in FIGURE 5, their descriptions will be omitted herein.

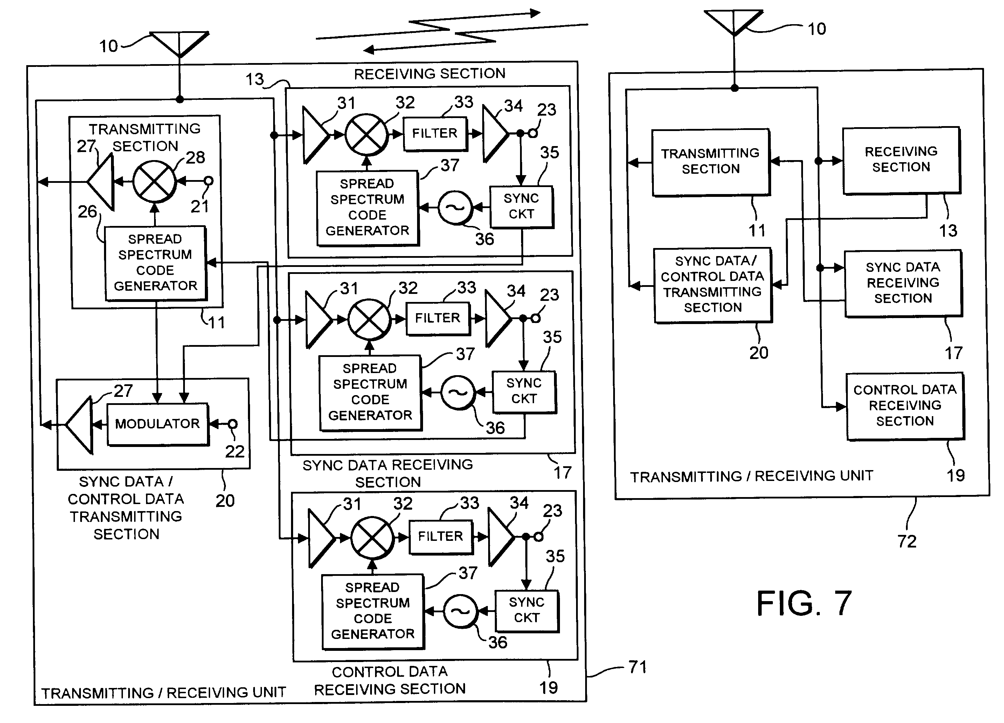

FIGURE 7 is a block diagram illustrating a third embodiment of the present invention comprising transmitting/receiving units 71, 72 where the operations of the synchronous data transmitting section 16 and the control data transmitting section 18 in the transmitting/receiving unit according to the embodiment of FIGURE 6 are integrated in the single synchronous data/control data transmitting section 20 together.

Although in the transmitting/receiving units 61 and 62 of the embodiment as shown in FIGURE 6 the synchronous data transmitting section 16 and the control data transmitting section 18 are separated each other, the synchronous data and the control data in general have fewer data amount compared with principal communication data to be transmitted or received. Especially, in the case that the synchronous data is transmitted by the spread spectrum modulation since the synchronous data is restored in the process of the spread spectrum demodulation of the transmitted synchronous data in the receiving section, the spread spectrum modulation itself has already carried out the transmission of the synchronous data. So, since the signal before the spread spectrum modulation does not require to carry any synchronous data, it is possible to carry different type of data. So that, it is possible to process both the synchronous data and the control data in single transmitting/receiving unit.

In this embodiment, by using the transmitting and receiving units 71 and 72 where both operations of the synchronous data transmitting section and the control data transmitting section are put together it is possible to reduce the circuit scale and contribute to the reducing the physical size and the cost of the transmitting/receiving unit.

Here, if it is took into account that the operations of the synchronous data transmitting section and the control data transmitting section are put in one synchronous/control data transmitting section together, since the transmitting and receiving operations of the transmitting/receiving units 71 and 72 shown in FIGURE 7 are the same as those of the embodiment of FIGURE 4, the descriptions of them will be omitted herein.

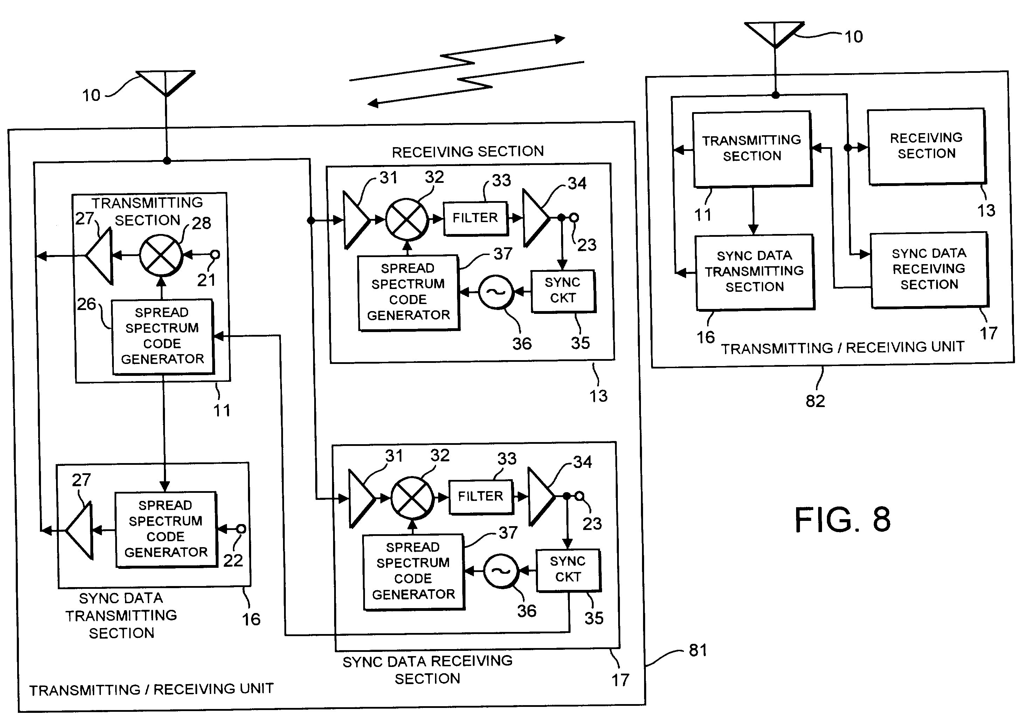

FIGURE 8 is a block diagram illustrating a fourth embodiment of the present invention, which emits the control data transmitting section and the control data receiving section from the transmitting/receiving units 71 and 72 of the embodiment shown in FIGURE 7.

The transmitting/receiving units of the embodiment shown in FIGURE 6 are provided with the control data transmitting sections and the control data receiving sections for controlling the transmitting section. However, there some cases that the transmitting section does not need to be controlled according to the contents of the data transmitted from the transmitting section. For instance, it is the case of video data transmitted from a video surveillance system for a home entrance and recorded continuously by the VTR. In this case, as shown in FIGURE 8 by using a transmitting/receiving unit which is omitted the control data transmitting section and the control data receiving section from the transmitting/receiving unit shown in FIGURE 7, it is possible to reduce the cost of the spread spectrum multiplex radio communication system.

Since the transmitting and receiving operations of the transmitting/receiving units 81 and 82 shown in FIGURE 8 are as same as those of the embodiment of FIGURE 1, the description of them will be omitted herein.

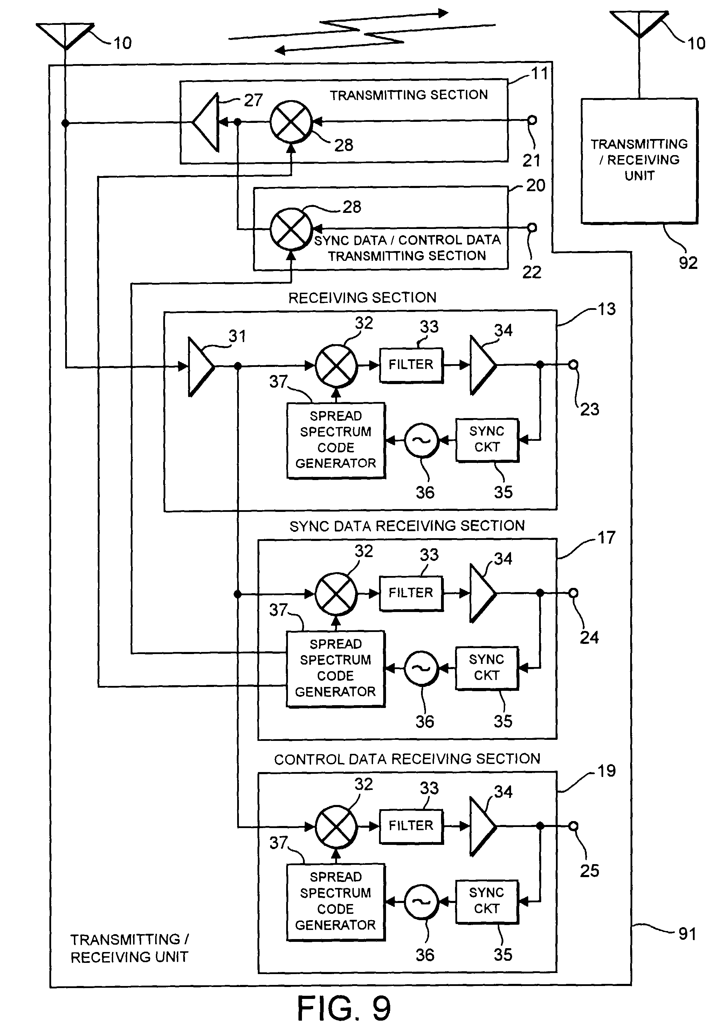

FIGURE 9 is a block diagram illustrating a fifth embodiment of the present invention, which embodies the construction of the transmitting/receiving unit explained in the embodiment shown in FIGURE 7. This embodiment is using the radio communication system of the spread spectrum communicating multiplex system where not only the normal data but also the synchronous data and control data are executed the spread spectrum modulation.

In this embodiment of FIGURE 9 the same sections which execute the same operation as the embodiment shown in FIGURE 7 are assigned with the same references. 21 denotes a transmitting data input terminal, 22 denotes a control data input terminal, 23 denotes a receiving data output terminal, 24 denotes a control data output terminal transmitted with the synchronous data, 25 denotes a output terminal of the control data, 28 denote a spread spectrum modulator, 27 denotes a transmission processing section, 31 denotes a receiving input section, 32 denote spread spectrum demodulators, 33 denote filters for passing only the necessary signal component, 34 denote receiving output amplifiers, 35 denote synchronous sections for synchronous capture in time of the spread spectrum demodulation, 36 denote clock generators, 37 denote spread spectrum code generators and 38 denotes a spread spectrum code generator for generating multiple outputs which have the same spread spectrum codes but phase-differentiated in time domain.

In the transmitting/receiving units 91 and 92 shown in FIGURE 9, each the receiving section, synchronous data receiving section, control data receiving section independently have the synchronous section 35 and spread spectrum code generators 37 and 38. In case of the radio communication system of the spread spectrum communicating multiplex system where not only the normal data but also synchronous data and control data are executed the spread spectrum modulation with the same spread spectrum codes the spread spectrum code generator outputs the spread spectrum codes having phases differentiated in time domain so as to reduce the number of the synchronous section and the spread spectrum code generator.

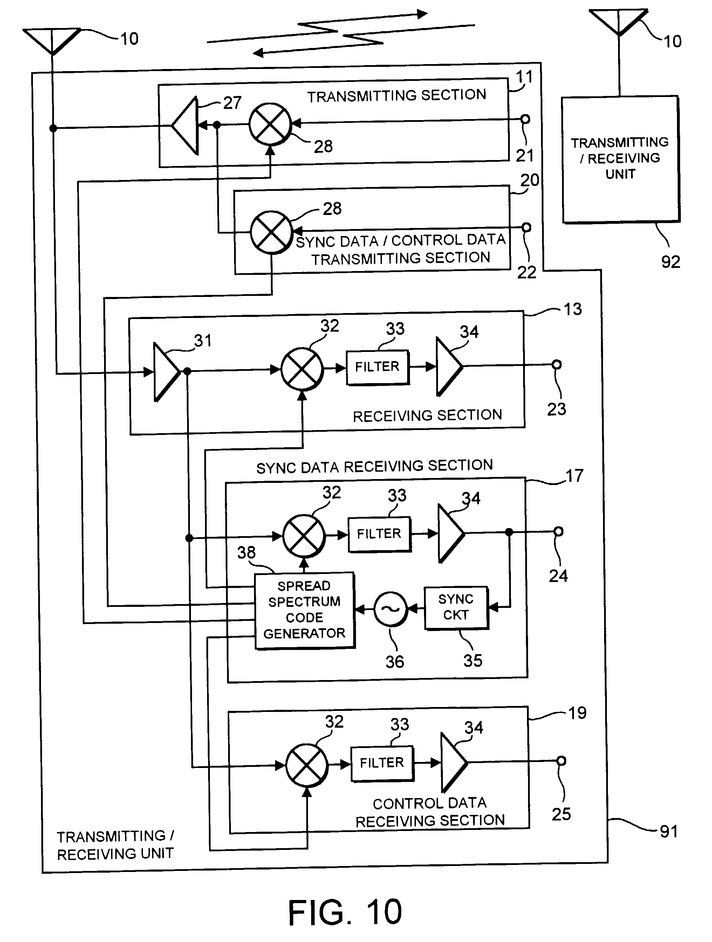

FIGURE 10 is explaining the sixth embodiment of the present invention, which reduces the number of the synchronous section 37 and the spread spectrum code generators 37 and 38 from the transmitting/receiving units 91 and 92 of the embodiment shown in FIGURE 9. In this case, the spread spectrum codes necessary for the transmitting and receiving of signals are collectively generated in the spread spectrum code generator 38 for generating multiple spread spectrum codes having different phases based on specific spread spectrum codes which are synchronized in the synchronous data receiving section.

The phase shifted time of each spread spectrum codes are decided in the diffuse generator 38. So, when the spread spectrum codes are used for the spread spectrum demodulation in the receiving section if the phase shifted time of the spread spectrum codes change slightly, the distance to the transmitting section which is transmitting the signal received by the units changes and the time for transmitting the radio frequency signal in the changed distance is not ignored to the transmitting velocity of the spread spectrum code, so that the signal is not received well by the shifted synchronization of the spread spectrum demodulation.

FIGURE 11 is a block diagram illustrating a seventh embodiment of the present invention which cope with the situation mentioned above. In this embodiment, the receiving section, the synchronous data receiving section and the control data receiving section are provided with each synchronous sections separately and one spread spectrum code generator which generates spread spectrum codes having different phases. The receiving section 13 and the control data receiving section 19 supply the spread spectrum codes from the spread spectrum code generator to the spread spectrum demodulators 32 via the phase devices 39 for shifting the phase of it.

In the receiving section 13 and the control data receiving section 19, by shifting the phase of the spread spectrum codes output from the spread spectrum code generator in the phase shifters 39 to be the synchronous phase obtained in the synchronous section 35 it is possible to prevent the shift of the synchronization of the spread spectrum demodulation so that the receiving section 13 and the control data receiving section 19 operates the spread spectrum demodulation well when the phase of the spread spectrum codes has slightly changed.

As described above, the present invention can provide an extremely preferable spread spectrum communication system. Accordingly, even though the transmitters are defined separately and the spread spectrum codes for the multiplexing are not generated in the same spread spectrum code generator together it is possible to realize the multiplexing of the spread spectrum communication for multiplexing the signals by diffusing the signals with the spread spectrum codes having the same spread spectrum codes and different phases, so that it is possible to realize the transmitting/receiving system using the same spread spectrum codes in the multiplex communication using the spread spectrum communication having the transmitters.

While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefor, it is intended that the present invention not be limited to the particular embodiment disclosed as the best mode contemplated for carrying out the present invention, but that the present invention includes all embodiments falling within the scope of the appended claims.

The foregoing description and the drawings are regarded by the applicant as including a variety of individually inventive concepts, some of which may lie partially or wholly outside the scope of some or all of the following claims. The fact that the applicant has chosen at the time of filing of the present application to restrict the claimed scope of protection in accordance with the following claims is not to be taken as a disclaimer or alternative inventive concepts that are included in the contents of the application and could be defined by claims differing in scope from the following claims, which different claims may be adopted subsequently during prosecution, for example, for the purposes of a divisional application.

## Claims

1. A spread spectrum communication system which is provided with:
multiple transmitters for executing a spread spectrum modulation on a signal to transmit the signal; and
at least one receiver for receiving the signal transmitted from the transmitters,
characterized by that;
at least one on the transmitters has a synchronous data transmitting section while the remaining transmitters have synchronous data receiving sections for receiving the synchronous data transmitted from the synchronous data transmitting section;
the at least one transmitter having the synchronous data transmitting section transmits a synchronous information of the spread spectrum codes which are used for the spread spectrum modulation, and the synchronous information is restored in the synchronous data receiving section, and spread spectrum codes which are used when the transmitters equipped with the synchronous data receiving section executes a spread spectrum transmission are synchronized using the received synchronous information, so that the multiplex communication by the transmitters is executed by using the same spread spectrum codes having phases differentiated in the time domain.

2. A spread spectrum communication system as claimed in claim 1, characterized by that a synchronous data transmitted from the synchronous data transmitting section is executed a spread spectrum modulation.

3. A spread spectrum communication system as claimed in claim 2, characterized by that the spread spectrum codes used for executing spread spectrum modulation on synchronous data to be transmitted from the synchronous data transmitting section are the same with spread spectrum codes used for executing spread spectrum modulation on signals in transmitter but phase-differentiated in the time domain.

4. A spread spectrum communication system as claimed in claim 1, characterized by that the receiver equips with a control data transmitting section, and at least one of the transmitters which equips with a synchronous data receiving section for receiving a synchronous data transmitted from the synchronous data transmitting section equips with a control data receiving section to controls the transmitters through the receiver by transmitting the control data from the control data transmitting section and receiving it in the control data receiving section.

5. A spread spectrum communication system as claimed in claim 4, characterized by that the synchronous data transmitted from the control data transmitting section is executed a spread spectrum modulation.

6. A spread spectrum communication system as claimed in claim 5, characterized by that spread spectrum codes used for executing a spread spectrum modulation on the control data transmitted from the control data transmitting section are the same with spread spectrum codes which are used when the transmitters execute the spread spectrum modulation, but they have phases differentiated in the time domain from those used in the transmitter or synchronous data transmitting section.

7. A spread spectrum communication system as claimed in claim 1, characterized by that it is provided with a transmitting section, a receiving section, a synchronous data transmitting section and a synchronous data receiving section which are integrated in a single transmitting/receiving unit which is capable of transmitting a signal while transmitting a synchronous data, or of receiving a synchronous data to synchronize the spread spectrum codes with each other by the received synchronous data and of also receiving data transmitted from other transmitter.

8. A spread spectrum communication system as claimed in claim 4, characterized by that it is provided with a single integrated transmitting/receiving unit which is capable of transmitting a signal while transmitting a synchronous data, or of receiving a synchronous data to synchronize the spread spectrum codes with each other by the received synchronous data and of also receiving data transmitted from other transmitter.

9. A spread spectrum communication system as claimed in claim 8, characterized by that it is provided with a single integrated transmitting/receiving unit having a synchronous data/control data transmitting section which shares the synchronous data transmitting section and the control data transmitting section.
